# EUROPEAN PATENT SPECIFICATION

(11) **EP 3 910 401 B1**
(45) Date of publication and mention of the grant of the patent: **07.09.2022**
(21) Application number: 20199529.7
(22) Date of filing: 01.10.2020
(51) Int. Cl.: G02B 26/02, H02N 2/10, H02N 2/02

(54) **OPTICAL BEAM INTENSITY CONTROL SYSTEM WITH PIEZOELECTRIC ACTUATOR**
STEUERSYSTEM FÜR DIE INTENSITÄT EINES OPTISCHEN STRAHLS MIT PIEZOELEKTRISCHEM AKTUATOR
SYSTÈME DE CONTRÔLE DE L'INTENSITÉ DU FAISCEAU OPTIQUE AVEC ACTIONNEUR PIÉZOÉLECTRIQUE

(30) Priority: 14.05.2020 LT 2020015
(43) Date of publication of application: 17.11.2021
(73) Proprietor: Vilniaus Gedimino technikos universitetas, 10223 Vilnius (LT); Kaunas University of Technology, 44249 Kaunas (LT); Vytauto Didziojo Universitetas, 44248 Kaunas (LT)
(72) Inventor: Vasiljev, Piotr, LT-08402 Vilnius (LT); Mazeika, Dalius, LT-03213 Vilnius (LT); Jurenas, Vytautas, LT-44147 Kaunas (LT); Borodinas, Sergejus, LT-08105 Vilnius (LT); Bareikis, Regimantas, LT-08105 Vilnius (LT); Ostasevicius, Vytautas, LT-54359 Kaunas (LT); Kulvietis, Genadijus, LT-01208 Vilnius (LT)
(74) Representative: Klimaitiene, Otilija

(56) References cited:
- EP-A2- 1 453 116
- JP-A- 2003 329 941
- US-A- 4 210 837
- VASILJEV P ET AL: "The investigation of the flat ring-type radial-torsional ultrasonic actuator and its application in micro UAV's", INTERNATIONAL WORKSHOP ON PIEZOELECTRIC MATERIALS AND APPLICATIONS IN ACTUATORS 2019, 1-4 OCTOBER 2019, LYON, 1 October 2019 (2019-10-01), pages 161-162, XP009525970,

## Description

### FIELD OF THE INVENTION

The invention belongs to the fields of mechatronic systems and robotics. It is a system for high-precision control of the angular position of the element used for changing intensity of the optical beam and for adjusting the luminous flux density of the optical beam passing through the beam intensity changing element.

### BACKROUND ART

The use of lasers in the manufacturing process faces the problem of how to accurately, according to a certain law, control the intensity of the laser beam or stabilize the intensity of the laser beam during a long technological process. Several technical solutions and patents are currently known to address this issue.

U.S. Pat. No. US7706069B2 describes a laser beam intensity control system (also: http://www.eksmaoptics.com), using rotary electric stepper motors or sliding electromechanical actuators designed to generate the precise rotational or linear motion of an element for changing the intensity of optical beam (optical beam phase plate or variable optical density filter). The main parameters that determine the quality of such an optical or laser beam intensity control system are the speed of the actuator and the resolution, i.e., the smallest displacement (angular or linear) that can still be implemented. Disadvantages of these technical solutions are limited accuracy of the displacement of the element that changes intensity of the laser beam, which depends on the accuracy of the electromechanical actuator.

Another known laser beam intensity control system is described in U.S. Pat. No. US8203253B2. This system uses a piezoelectric actuator capable of providing a precision sliding motion to the element for changing intensity of the laser beam in two mutually perpendicular directions. In one direction, the element moves in step mode when asymmetric pulses are excited in the actuator, and in the other direction (which is perpendicular to the first one), the element moves when quasi-static bending deformations are excited in the console-mounted actuator. In this case, the resolution of step motion generated by the actuator is significantly worse, but the travel is much higher than the bending deformations, and the directions of these two movements are perpendicular to each other. In this way, the accuracy of the precise positioning of the element for changing the intensity of the laser beam and the stroke of the motion in different directions are very different, which impairs the efficiency of the laser beam intensity control system. In addition, an element for changing the intensity of laser beam connected to a console-mounted piezoelectric actuator greatly degrades the dynamic characteristics of the actuator.

JP 2003-329941 A discloses a system with a piezoelectric rotary ultrasonic motor to control the intensity of an optical beam, wherein the stator comprises an elastic disk with an annular piezoelectric element on its lower surface, exciting a combined radial and bending mode standing wave which directly drives the rotor, constituted by a variable optical attenuator disk, by protrusions formed on the upper surface of the elastic disk. Alternatively, the attenuator disk can be rotated by a combined longitudinal and bending mode rectangular piezoelectric vibrator with quadrant electrodes, a configuration which is also shown by EP 1 453 116 A2.

US 4,210,837 teaches general rotary ultrasonic motors with combined longitudinal and torsion mode resonators, each comprising a cylinder which drives a rotor pressed against its upper surface, an outer ring, and radially inclined rods fixed either to the ring or to the cylinder. A disk-shaped piezoelectric element is fixed to the lower surface of the cylinder.

### SUMMARY OF THE INVENTION

The essence and object of the present invention is to increase the accuracy of the optical beam intensity control system, to improve its dynamic characteristics and to expand the functional possibilities.

The target of the invention is achieved by creating a new optical beam intensity control system, which rotates the element for changing intensity of the beam (optical beam retardation plate or variable optical density filter) with high precision by using a piezoelectric actuator consisting of a thin-walled annular elastic disc having the inner flat surface perforated with elongated slots, directed at an acute angle to the constituent of a thin-walled cylinder, which is resiliently attached to the inner surface of the disc at one end. Attached to the outer cylindrical surface of the other end of said cylinder is a rotor that is resiliently pressed and placed in a bearing support, to which an element for changing the intensity of the optical beam is attached. The thin-walled annular disk and the two thin-walled piezoelectric elements concentrically attached to both sides of its flat outer ring portion form a bimorph annular piezoelectric actuator, wherein the electrodes of piezoelectric elements are connected to the controlled signal generator, which generates either an asymmetrical electric signal of frequency close to radial oscillation mode of thin-walled bimorph annular piezoelectric actuator, or DC electric signal with controlled amplitude.

When the piezoelectric electrodes of the bimorph actuator are excited by a signal with a frequency close to the radial oscillation mode of the piezoelectric actuator, the rotor with the element for changing the intensity of the optical beam is rotated about the longitudinal axis of the cylinder in stepping mode with unlimited angular displacement and the resolution of the smallest generated steps. When the piezoelectric elements of the bimorph piezoelectric actuator are excited by the DC signal, the quasi-static radial deformations are excited in the piezoelectric bimorph actuator which, due to the perforated elongated slots directed at an acute angle to the constituent of the cylinder, generate rotational motion to said cylinder and, at the same time, to the rotor with an element for changing intensity of the optical beam; the motion is obtained with the amplitude conditioned by quasi-static radial deformation of an angular shift and a very high resolution.

In order to increase the rotational speed of the rotor, said cylinder is made of stiff material of a high mechanical quality, and its length is selected to be a quarter of the wavelength of torsional oscillations of excited in the cylinder.

In order to extend the functionality of the optical beam intensity control system, an optical lens is concentrically attached to the flat outer portion of the perforated thin-walled annular elastic disk so that its optical axis coincides with the axis of symmetry of said disk, and the outer portion of the resilient disk that is free of piezoelectric elements is perforated with concentric slots so that the piezoelectric actuator together with the lens can move along its optical axis; the electrodes of piezoelectric elements are connected to a controlled asymmetric signal generator whose frequency is close to one of the bending oscillation modes of the perforated thin-walled annular elastic disk in such a way that bending oscillations in the ring is excited.

### DESCRIPTION OF DRAWINGS

The drawings are provided as a reference to possible embodiments and are not intended to limit the scope of the invention. Neither of the drawings and the graphs presented herein should be construed as limiting the scope of the invention, but merely as an example of possible embodiment.
- **Fig. 1 a-c**: Schematic diagram of optical beam intensity control system with piezoelectric actuator: (a) system configuration with the optical disk-shaped element that changes intensity of the beam due to rotational movement of the actuator, (b) system configuration supplemented with optical beam-steering mirrors, (c) system configuration supplemented with optical beam steering mirrors and the optical element that changes the luminous flux, e.g., a lens.
- **Fig. 2**: View of the thin-walled cylinder and the ring assembly structure.
- **Fig. 3**: View of the main unit of the piezoelectric actuator.
- **Fig. 4**: View of the piezoelectric actuator rotor mounting structure.
- **Fig. 5**: Schematic diagram of the piezoelectric actuator with 2 degrees of freedom (2D).
- **Fig. 6**: Illustration of radial and rotational oscillations of the elastic unit (6,7,11).
- **Fig. 7**: Illustration of bending and sliding oscillations of the elastic unit (6,7,11).

### DRAWINGS - description of marked objects

- **1**: the laser beam, the optical beam;
- **2**: the laser beam steering mirrors;
- **3**: the piezoelectric actuator, the piezo actuator;

- **4**: the rotor;
- **5**: the element for changing intensity of the beam;
- **6**: the cylinder;
- **7**: the perforated thin-walled annular elastic disk;
- **8**: the elongated slots of the thin-walled annular elastic disc directed at an acute angle (α) to the constituent of the cylinder 6;
- **9**: the part of the thin-walled annular elastic disk that is without perforation;
- **10**: the controller / the signal generator;
- **11**: the thin-walled annular piezoelectric elements, polarized according to their thickness;
- **12**: the asymmetric waveform of the generator signal;
- **13**: the flat spring;
- **14**: the piezo actuator housing;
- **15**: the mounting bridges for elastic fixing;
- **16**: the concentric slots reducing radial stiffness of the elastic disk (7) in the mounting housing (14);
- **17**: the bearing;
- **18**: the bearing socket;
- **19**: the height of the cylinder (6);
- **20**: the holder for optical lens;
- **21**: the optical lens;
- **22**: the concentric slots reducing stiffness of the elastic disk (7) in the mounting housing (14) in the direction of the optical axis of the lens;
- **23**: the direction of movement of the optical lens;
- **24**: the axis of optical lens;
- **25**: the sensor of light intensity.

### DETAILED DESCRIPTION OF THE INVENTION AND ITS EMBODIMENTS

The invention and its embodiments will hereinafter be described with reference to the drawings, but embodiments of the invention are not limited to the embodiments disclosed herein, and various modifications of the embodiments are possible.

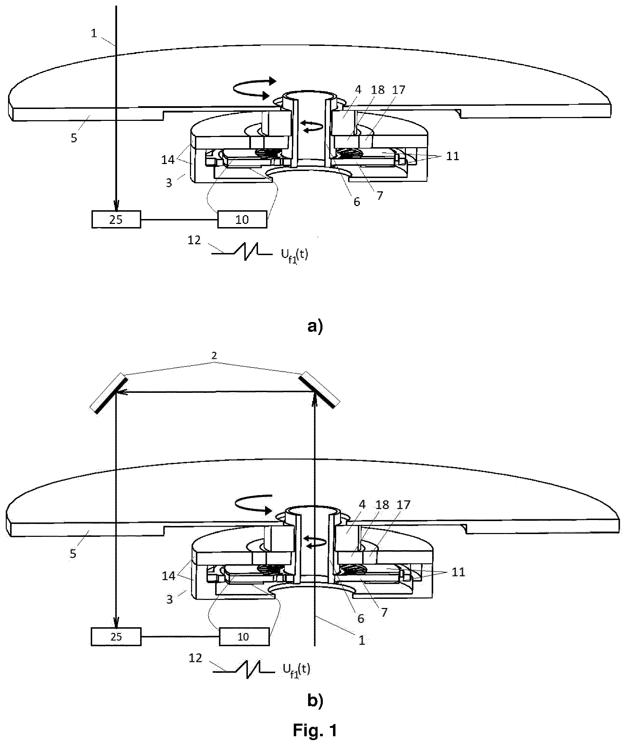

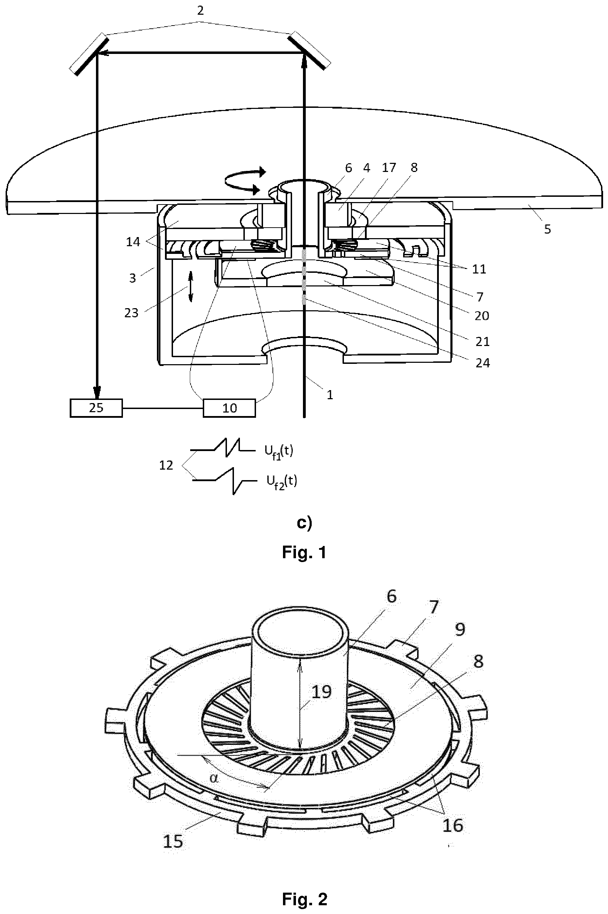

**Detailed description of the system.** The optical beam intensity control system (Fig. 1 a) comprises the controller / signal generator (10), the light intensity sensor (25) and the piezoelectric actuator (3) having the rotor (4) that rotates the unit (element) (5) for changing intensity of the laser beam (1). The optical beam intensity control system can additionally be equipped with mirrors (2) that control direction of the laser beam (1), directing the beam (1) through the cylinder (6), as shown in Fig. 1 b. The piezoelectric actuator (3) comprises the perforated thin-walled annular elastic disk (7) and the elastic unit of the cylinder (6) (Fig.2). The thin-walled annular elastic disk (7) is perforated with elongated slots of the thin-walled annular elastic disc directed at an acute angle (α) to the constituent of the cylinder (6). The angle α determines the angular speed and the torque of the piezoelectric actuator rotor (4). When asymmetrical radial oscillations of the annular elastic disk (7) are excited or it is statically deformed in the radial direction, asymmetrical rotational oscillations of the cylinder (6) are generated or quasi-static angular shift of the cylinder (6) is induced due the perforated slots (8) directed at the angle α to the surface constituent of the cylinder (6); the oscillations or the shift, due the frictional contact between the cylinder (6) and the rotor (4), induce a directional rotational movement of the rotor (4) or a quasi-static rotational shift of the rotor, respectively.

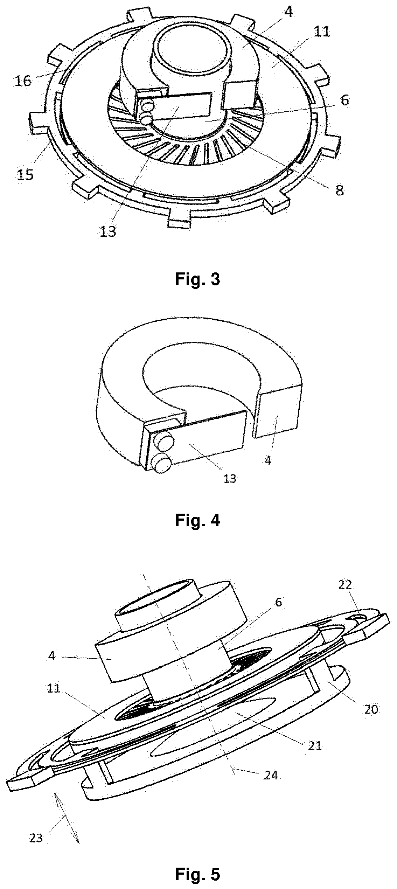

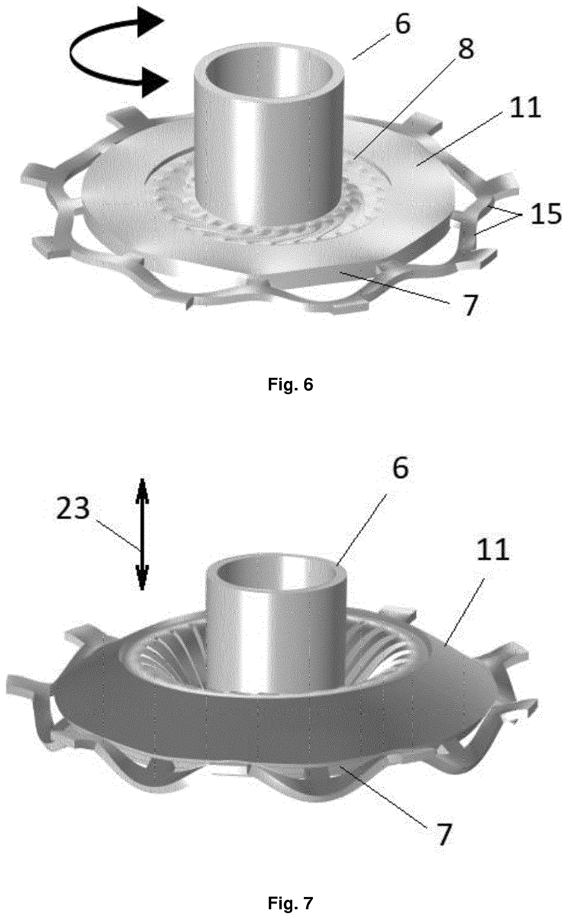

Two thin annular piezoelectric elements (11) polarized in the direction of their thickness are attached (glued) to the flat, perforation-free part (9) of the annular elastic disk (7) and their polarization vectors are directed in opposite directions (Fig. 1a, 1b). The electrodes of the piezoelectric elements (11) are connected to the controlled asymmetric signal generator (10) whose generated signal (12) frequency is close to the radial oscillation mode of the perforated thin-walled elastic disk (7), as shown in Fig. 7. The rotor (4) is pressed against the outer surface of the cylinder (6) (Fig. 3) by a flat spring (13) so as to be able to rotate the beam-intensity-changing element (5) (Fig. 1). The thin-walled annular elastic disk (7) is connected to the actuator housing (14) via bridges (15) obtained by means of the concentric slots (16) (Fig. 2). In turn (Fig. 1), the actuator rotor (4) is connected to the housing (14) via the bearing (17) and the bearing bracket (18) to be rotatable.

In order to increase efficiency of the piezoelectric actuator (3) and rotational speed of the rotor (4), the cylinder's (6) length (19) is selected to be equal to multiple quarters of the wavelength of the torsional oscillation that is excited in the cylinder (6) (Fig. 2), and the cylinder (6) and the thin-walled annular elastic disk (7) are made of materials with high resistance to dynamic loads and low acoustic damping, such as alloyed steel (440C, CPM10V) or titanium alloys (Ti6AI4V, Ti6AI6V2Sn).

In order to expand the functional possibilities of the optical beam intensity control system (Fig. 6) when using it in digital technologies (e.g. Direct Metal Laser Sintering), when the position of the laser beam shaper is controlled, the optical lens (21) is attached to the flat outer part of the perforated thin-walled annular elastic disk (7) via the holder (20) concentrically in respect to the disk in such a way that its optical axis (24) coincides with the axis of symmetry of said disk (7), and the outer flat surface of the disk (7), free of piezoelectric elements, is perforated with concentric slots (22) in such a way that the piezoelectric actuator (Fig. 5) together with the lens (21) can move (23) along its optical axis (24), and the electrodes of said piezoelectric elements (11) are connected to the controlled asymmetric-signal generator (10) whose generated signal (12) frequency is set close to one of the oscillation modes of bending the perforated thin-walled annular elastic disk (7), so that the bending oscillations in the disk are induced.

**Description of system operation.** There are three modes (versions) for controlling the optical beam intensity in the described system.

Operating version 1. The first version of operation is illustrated in Fig. 1. From the controlled-signal generator (10) to the electrodes of the piezoelectric elements (11) an asymmetric electrical signal (12) is applied with frequency f₁ that is close to the radial oscillation mode of the perforated thin-walled annular elastic disk (7), which induces radial oscillations in the disk; the radial oscillations, due to the perforated slots (8) directed at an acute angle (α) to the surface constituent of the cylinder (6), cause periodic asymmetric rotational oscillations of the cylinder (6) (Fig. 7). Since the cylinder (6) (Fig. 1a, 1b) is connected to the rotor (4) (Fig. 3) via the spring (13) with sliding and spring-loaded functionality (Fig. 3), the rotor (4), due to asymmetric rotational oscillations, rotates directionally together with the beam-intensity-control element (5) that is rigidly connected to it. Transmission of radial vibrations into the actuator housing (14) is isolated by the bridges (15).

Laser beam passes directly (Fig. 1a) or through the guide mirrors (Fig. 1 b, c) through the beam-intensity-control element (5). The required laser light intensity is obtained by rotating said element (5), which is rigidly connected to the rotor (4), around the axis (24) at the required angle.

If the cylinder (6) is made so that its height (19) is equal to a multiple of quarters of the wavelength of the torsional oscillations excited in the cylinder (6), the cylinder (6) becomes resonant, which allows significantly to increase amplitudes of the torsional oscillations and, at the same time, if necessary, the rotational speeds of the rotor.

Operating version 2. The second version of operation (Fig. 5, 1c) allows obtaining a sliding motion of said unit and attached to it optical element, such as the lens (21), in respect to the rotor (4) by using the same combination of elements (the perforated thin-walled annular elastic disk (7) and the cylinder (6)). When from the generator (10) to the electrodes of the piezoelectric elements (11) the controlled asymmetric electrical signal (12) is applied with frequency f₂ set close to the bending oscillation mode of the perforated thin-walled annular elastic disk (7) (Fig. 8), bending oscillations are induced in the disk (7), which causes periodic asymmetrical motion of the cylinder (6) parallel to the axis (24). Since motion of the rotor (4) with respect to the axis (24) is limited by the bearing (17), the cylinder/disc assembly (6-7), affected by asymmetrical oscillations, can slide with respect to the rotor (4). The outer flat surface of the thin-walled annular elastic disk (7) is free of piezoelectric elements and is perforated with concentric slots (22), which result in high radial stiffness of the disk (7) and low stiffness along the optical lens axis (24), thereby limiting the cylinder/disk assembly (6-7) motion in radial direction, but allowing it to slide along the axis (24).

Operating version 3. The third mode of operation of the optical beam intensity control system is possible when the piezoelectric elements (11), attached to the perforated thin-walled ring-shaped disk (7) (Fig. 1), are excited by a DC signal (12). Then the quasi-static radial deformations are excited in the thin-walled annular elastic disk (7), which, due to the perforated elongated slots (8) (Fig. 2), directed at an acute angle to the constituent of the surface of the cylinder (6), provide a rotational motion to the cylinder and also to the rotor (4) (Fig. 1) with the element for changing the intensity of the optical beam (5) with an amplitude of angular shift and a very high resolution, which is conditioned by the quasi-static radial deformation. The amplitude of the angular shift of the rotor (4) with the optical-beam-intensity changing element (5) depends on the voltage of the electrical signal (12) and the angle of deflection α of the slots of the perforated thin-walled annular elastic disk (7).

## Claims

1. An optical beam intensity control system (1), comprising
- one or more optical elements changing the intensity of the beam (1), and
- a piezoelectric actuator controlling these optical elements,
**characterized in that**
the piezoelectric actuator (3) comprises a thin-walled annular elastic disk (7), an inner flat surface of which is perforated with elongated slots (8) directed at an acute angle (α) to an outer surface of a thin-walled cylinder (6), which is elastically attached to the disk (7) at one end, and two thin-walled annular piezoelectric elements (11) concentrically attached to both sides of a flat outer part of the annular elastic disk (7), the electrodes of which are connected to a signal generator (10) of the piezoelectric actuator, wherein a rotor (4) holding the optical element (5) that changes intensity of the beam (1) due to rotation of the rotor (4) movement is placed in a bearing bracket (18) and is elastically pressed against an outer cylindrical surface of the other end of the thin-walled cylinder (6)

2. The system according to claim 1, **characterized in that** the piezoelectric elements (11) of the piezoelectric actuator (3) can be excited by asymmetric signals (12) from the signal generator (10) of the piezoelectric actuator, and the frequency is selected close to an eigenmode of radial oscillation of the elastic disk (7).

3. The system according to claims 1 and 2, **characterized in that** the thin-walled cylinder (6) of the piezoelectric actuator (3) is made of high-stiffness and high-mechanical-quality material to have better dynamic characteristics of rotation of the rotor (4), and the cylinder length is selected as a multiple of quarters of a wavelength of torsional oscillation of the cylinder (6).

4. The system according to claim 1, **characterized in that** the piezoelectric actuator (3) is adapted to perform quasi-static rotational movements of the cylinder (6) that are obtained by applying a DC electric signal with controlled amplitude (12) from the signal generator (10) to the electrodes of the piezoelectric elements (11), which creates radial deformations of the elastic disk (7) which, due to the perforated slots (8), rotate the cylinder (6) together with the rotor (4) and the element for changing beam intensity (5) with high precision.

5. The system according to claim 1, **characterized in that** the piezoelectric actuator (3) has an optical lens (21) concentrically attached to a flat outer part of the annular elastic disk (7), the optical axis of which coincides with the axis of symmetry of the elastic disk (7), and the flat outer surface of the disc (7), free of piezoelectric elements, is perforated with concentric slots (16, 22) so that the piezoelectric actuator (3) together with the lens (21) can move along the optical axis (24) of the lens.

6. The system according to claim 5, **characterized in that** the piezoelectric elements (11) for movement of the lens (21) along the optical axis (24) can be controlled by asymmetric signals (12) of the generator (10), the frequency of which is selected close to one of the bending oscillation modes of the elastic disc (7) so that bending oscillations are induced in the elastic disk.

## Patentansprüche

1. Ein optisches System zur Intensitätsregelung eines Strahls (1), bestehend aus
- einem oder mehreren optischen Elementen, welche die Intensität des Strahls (1) verändern, und
- einem piezoelektrischen Aktuator, der diese optischen Elemente steuert,
**dadurch gekennzeichnet, dass**
der piezoelektrische Aktuator (3) aus einer dünnwandigen, ringförmigen, elastischen Scheibe (7) besteht, deren ebene Innenseite mit Längsschlitzen (8) versehen ist, die in einem spitzen Winkel (α) zu einer Außenfläche eines dünnwandigen Zylinders (6) gerichtet sind, welcher an einem Ende elastisch an der Scheibe (7) befestigt ist, und zwei dünnwandigen ringförmigen piezoelektrischen Elementen (11), die konzentrisch an beiden Seiten eines ebenen äußeren Bereichs des Rings der elastischen Scheibe (7) befestigt sind, deren Elektroden mit einem Signalgenerator (10) des piezoelektrischen Aktuators verbunden sind, wobei ein Rotor (4), in dem sich das optische Element (5) befindet, das die Intensität des Strahls (1) durch die Rotationsbewegung des Rotors (4) verändert, in einem Lagerträger (18) positioniert und elastisch gegen eine zylindrische Außenseite am anderen Ende des dünnwandigen Zylinders (6) gedrückt wird.

2. System nach Anspruch 1, **dadurch gekennzeichnet, dass** die piezoelektrischen Elemente (11) des piezoelektrischen Aktuators (3) durch asymmetrische Signale (12) vom Signalgenerator (10) des piezoelektrischen Aktuators angeregt werden können und die Frequenz in der Nähe einer Eigenmode der radialen Schwingung der elastischen Scheibe (7) ausgewählt wird.

3. System nach Anspruch 1 und 2, **dadurch gekennzeichnet, dass** der dünnwandige Zylinder (6) des piezoelektrischen Aktuators (3) aus einem Material mit hoher Steifigkeit und hoher mechanischer Qualität besteht, um bessere dynamische Rotationseigenschaften des Rotors (4) zu erzielen, und dass die Zylinderlänge als ein Vielfaches von Viertel-Wellenlängen der Drehschwingung des Zylinders (6) ausgewählt wird.

4. System nach Anspruch 1, **dadurch gekennzeichnet, dass** der piezoelektrische Aktuator (3) geeignet ist, die quasistatischen Drehbewegungen des Zylinders (6) auszuführen, die durch das Anlegen eines Gleichstromsignals mit kontrollierter Amplitude (12) vom Signalgenerator (10) an die Elektroden der piezoelektrischen Elemente (11) erzeugt werden, wodurch radiale Verformungen der elastischen Scheibe (7) entstehen, die aufgrund der Lochschlitze (8) den Zylinder (6) zusammen mit dem Rotor (4) und dem Element zur Änderung der Strahlintensität (5) mit hoher Präzision zum Drehen bringen.

5. System nach Anspruch 1, **dadurch gekennzeichnet, dass** der piezoelektrische Aktuator (3) eine optische Linse (21) aufweist, die konzentrisch an dem ebenen Außenteil der ringförmigen, elastischen Scheibe (7) befestigt ist, deren optische Achse mit der Symmetrieachse der elastischen Scheibe (7) und der ebenen Außenseite der Scheibe (7) übereinstimmt, die frei von piezoelektrischen Elementen ist, mit konzentrischen Schlitzen (16, 22) durchlöchert ist, sodass sich der piezoelektrische Aktuator (3) zusammen mit der Linse (21) entlang der optischen Achse (24) der Linse bewegen kann.

6. System nach Anspruch 5, **dadurch gekennzeichnet, dass** die piezoelektrischen Elemente (11) zur Bewegung der Linse (21) entlang der optischen Achse (24) durch asymmetrische Signale (12) des Generators (10) gesteuert werden können, deren Frequenz in der Nähe der Biegeschwingungsmoden der elastischen Scheibe (7) gewählt wird, sodass in der elastischen Scheibe Biegeschwingungen induziert werden.

## Revendications

1. Système de contrôle de l'intensité du faisceau optique (1), comprenant
- un ou plusieurs éléments optiques modifiant l'intensité du faisceau (1), et
- un actionneur piézoélectrique contrôlant ces éléments optiques,
**caractérisé en ce que**
l'actionneur piézoélectrique (3) se compose d'un disque élastique annulaire à paroi mince (7), dont la surface plate intérieure est perforée de fentes allongées (8) dirigées selon un angle aigu (a) par rapport à une surface extérieure d'un cylindre à paroi mince (6), qui est fixé élastiquement au disque (7) à une extrémité, et de deux éléments piézoélectriques annulaires à paroi mince (11) fixés de manière concentrique des deux côtés d'une partie extérieure plate de l'anneau du disque élastique (7), dont les électrodes sont connectées à un générateur de signaux (10) de l'actionneur piézoélectrique, dans lequel un rotor (4) maintenant l'élément optique (5) qui modifie l'intensité du faisceau (1) du fait du mouvement de rotation du rotor (4) est placé dans un support de palier (18) et est pressé élastiquement contre une surface cylindrique extérieure de l'autre extrémité du cylindre à paroi mince (6).

2. Système selon la revendication 1, **caractérisé en ce que** les éléments piézoélectriques (11) de l'actionneur piézoélectrique (3) peuvent être excités par des signaux asymétriques (12) provenant du générateur de signaux (10) de l'actionneur piézoélectrique, et la fréquence est choisie proche d'un mode propre d'oscillation radiale du disque élastique (7).

3. Système selon les revendications 1 et 2, **caractérisé en ce que** le cylindre à paroi mince (6) de l'actionneur piézoélectrique (3) est constitué d'un matériau de haute rigidité et de haute qualité mécanique pour permettre de meilleures caractéristiques dynamiques de rotation du rotor (4), et la longueur du cylindre est choisie en tant que multiple de quarts d'une longueur d'onde d'oscillation de torsion du cylindre (6).

4. Système selon la revendication 1, **caractérisé en ce que** l'actionneur piézoélectrique (3) est adapté pour générer des mouvements de rotation quasi-statiques du cylindre (6) qui sont obtenus en appliquant un signal électrique CC d'amplitude contrôlée (12) à partir du générateur de signaux (10) aux électrodes des éléments piézoélectriques (11), ce qui crée des déformations radiales du disque élastique (7) qui, grâce aux fentes perforées (8), font pivoter le cylindre (6) conjointement avec le rotor (4) et l'élément pour changer l'intensité du faisceau (5) avec une grande précision.

5. Système selon la revendication 1, **caractérisé en ce que** l'actionneur piézoélectrique (3) possède une lentille optique (21) fixée de manière concentrique à la partie extérieure plate du disque élastique annulaire (7), dont l'axe optique coïncide avec l'axe de symétrie du disque élastique (7), et la surface extérieure plate du disque (7), exempte d'éléments piézoélectriques, est perforée de fentes concentriques (16, 22) de sorte que l'actionneur piézoélectrique (3), conjointement avec la lentille (21), puisse se déplacer le long de l'axe optique (24) de la lentille.

6. Système selon la revendication 5, **caractérisé en ce que** les éléments piézoélectriques (11) servant au déplacement de la lentille (21) le long de l'axe optique (24) peuvent être commandés par des signaux asymétriques (12) du générateur (10), dont la fréquence est choisie proche de l'un des modes d'oscillation de flexion du disque élastique (7) de manière à induire des oscillations de flexion dans le disque élastique.
